Europäisches Patentamt

European Patent Office

Office européen des brevets

(11) Veröffentlichungsnummer: **0 223 104**
**A1**

# (12) EUROPÄISCHE PATENTANMELDUNG

(21) Anmeldenummer: **86114828.6**

(22) Anmeldetag: **24.10.86**

(51) Int. Cl.⁴: **C23C 4/10**

(30) Priorität: **29.10.85 DE 3538390**

(43) Veröffentlichungstag der Anmeldung:
**27.05.87 Patentblatt 87/22**

(84) Benannte Vertragsstaaten:
**AT CH DE FR GB IT LI SE**

(71) Anmelder: **Deutsche Forschungs- und Versuchsanstalt für Luft- und Raumfahrt e.V. Linder Höhe Postfach 90 60 58 D-5000 Köln 90(DE)**

(72) Erfinder: **Henne, Rudolf, Dr. Dipl.-Phys. Teinacher Strasse 2 D-7030 Böblingen(DE)**
Erfinder: **Weber, Winfried, Dipl.-Phys. Lindenweg 7 D-7022 Leinfelden-Echterdingen(DE)**
Erfinder: **v. Bradtke, Michael, Dr. Dipl.-Phys. Röhrerstrasse 18 D-7031 Steinenbronn(DE)**

(74) Vertreter: **Hoeger, Stellrecht & Partner Uhlandstrasse 14c D-7000 Stuttgart 1(DE)**

(54) **Beschichtung für ein Substrat und Verfahren zu dessen Herstellung.**

(57) Um eine auch bei hohen Temperaturen dauerhafte, porenfreie und festhaftende Beschichtung für ein Substrat zu erhalten, insbesondere für ein Substrat aus einem refraktären Metall, wird vorgeschlagen, daß die Beschichtung aus Aluminiumsilikat besteht. Ferner wird ein Verfahren zur Herstellung einer solchen Beschichtung vorgeschlagen. Nach diesem Verfahren wird das Beschichtungsmaterial in Pulverform in einen mit Hilfe eines Plasmabrenners erzeugten Plasmastrahl eingebracht und dann auf dem substrat abgelagert. Der Plasmabrenner und das Substrat werden dabei in einer Unterdruckumgebung gehalten.

Fig.2

## Beschichtung für ein Substrat und Verfahren zu dessen Herstellung

Die Erfindung betrifft eine Beschichtung für ein Substrat, insbesondere aus einem refraktären Metall.

Ferner betrifft die Erfindung ein Verfahren zum Aufbringen einer Beschichtung auf einem Substrat, insbesondere einem refraktären Metall, mit Hilfe eines Plasmaspritzverfahrens, bei dem das aufzubringende Material in Pulverform in einen in einem Plasmabrenner erzeugten Plasmastrahl eingebracht und auf dem Substrat abgelagert wird.

Refraktäre Metalle, wie Molybdän, besitzen einen hohen Schmelzpunkt (oberhalb 2400°C). Sie zeichnen sich unter anderem durch eine hohe Festigkeit und eine niedrige Abdampfrate aus, selbst noch bei Temperaturen über 1000°C, wie sie zum Beispiel in der modernen Energietechnik angestrebt werden. Daneben besitzen sie Eigenschaften, die sie auch für den chemischen Apparatebau und die Verfahrenstechnik interessant machen. Hinsichtlich Hochtemparaturanwendung liegt allerdings eine starke Einschränkung vor, die in der starken Oxidationsneigung in sauerstoffhaltiger Umgebung bereits ab wenigen 100°C begründet ist. Dem versucht man durch das Aufbringen von Schutzschichten gegen oxidativen Angriff abzuhelfen.

Auch im Zusammenhang mit elektrochemischen Anwendungen kann sich die Forderung nach einer elektrisch isolierenden Beschichtung stellen, wobei dann auf die besonderen Bedingungen des Elektrolyten abzustellen ist.

Von den zahlreichen Lösungsansätzen lassen sich solche als charakteristisch herausheben, bei denen zwei ebene Bleche miteinander verbunden sind, oder bei denen das Schutzschichtmaterial zunächst vorwiegend in Pulverform vorliegt. Als Schutzüberzüge -und in Blechform verfügbar -kommen für die erste Gruppe Superlegierungen auf Ni- oder Co-Basis -oder Heizleiterlegierungen vorwiegend auf Fe-Basis infrage. Im Vergleich beispielsweise zu Molybdän weisen sie jedoch eine beträchtlich höhere Wärmedehnung auf, so daß sich der Verbund wie ein Bimetall verhalten und sich lösen kann. Eine weitere Einschränkung -vor allem hinsichtlich maximaler Einsatztemperaturen - kann durch die Bildung eutektischer Phasen aus den Verbundpartnern gegeben sein. Die eutektische Temperatur von MoNi liegt beispielsweise bei 1315°C.

Für das Verbinden ebener Bleche sind verschiedene Techniken bekannt, beispielsweise wurde versucht, in kaltem wie auch in heißem Zustand oxidationsbeständiges Material auf das zu - schützende Substrat aufzuwalzen und zu befestigen. Dabei sind eine Vielzahl von Werkstoffen ausprobiert worden. Die Versuche scheiterten jedoch beispielsweise bei der Verwendung von Molybdän als Grundmaterial praktisch vollständig, vor allem weil sich auf der Oberfläche Oxide bilden, die eine ausreichende Bindung verhindern.

Bei einer anderen Technik versucht man, Substrat und in Blechform vorliegende Schutzschicht durch Diffusionsschweissen unter Einwirkung von Druck und Temperatur in einer Vakuum-oder Schutzgaskammer zu verbinden. Mit diesen Verfahren kann man festhaftende Fügungen und Plattierungen herstellen (W. Werdecker; F. Aldinger: "Verbinden von hochschmelzenden Metallen durch die HiP-Technologie", (RM 21), Proc. 10. Plansee-Seminar 1981, Reutte, Österreich, Seiten 161 bis 193, Band 2). Da das Verfahren aber relativ lange Zeit beansprucht, können durch Diffusionsvorgänge spröde, intermetallische Phasen entstehen, die einerseits die Festigkeit herabsetzen und andererseits eine Weiterverarbeitung des Verbundes -beispielsweise durch Auswalzen -erschweren oder unmöglich machen. Generell kann zu diesem Verfahren festgestellt werden, daß es sehr zeit-und kostenintensiv ist und nur auf relativ kleine und relativ ebene Proben angewendet werden kann.

Bei einem weiteren Verfahren dieser Art, dem Explosiv-Plattieren, sind die Reaktions-und Diffusionszeiten sehr kurz. Bei richtiger Parameterwahl können spröde, intermetallische Phasen vermieden und feste, auswalz-beziehungsweise tiefziehfähige Verbundbleche hergestellt werden (R. Prümmer; R. Henne, Proc. 10. Plansee-Seminar 1981, Seiten 33 bis 47 (RM 47), Band 3; Europäische Patentschrift 8068). Wie bei den vorher beschriebenen Verfahren besteht auch hier der Nachteil einer weitgehenden Beschränkung auf ebene Geometrie. Auch liegen Einschränkungen hinsichtlich Deckschicht-Dicke und Dickenverhältnis der Verbundblechpartner vor.

Beim Aufbringen eines Schutzschichtmaterials, das im Ausgangszustand als Pulver vorliegt, wurden bisher hauptsächlich Silicide verwendet. Diese Materialien, zum Beispiel $MoSi_2$, können bis zu Temperaturen um 1400°C eingesetzt werden, wobei ihre Schutzfunktion durch die Bildung einer festhaftenden $SiO_2$-Oberflächenschicht in oxidierender Umgebung begründet ist (J. Schlichting in: Blech, Rohre, Profile 26 (1979) 5, Seiten 226 bis 232).

Eine mögliche Art der Aufbringung ist das Aufsintern. Dabei wird das Teil aus refraktärem Material in das Schutzmaterial eingepackt und unter Sauerstoffabschluß längere Zeit einer für den Sintervorgang ausreichend hohen Temperatur ausgesetzt. Zur Erzielung einer ausreichenden Haftfestigkeit und Porenfreiheit beziehungsweise Dichte kann eine gleichzeitige Druckeinwirkung erforderlich sein, zum Beispiel durch heißisostatisches Pressen (HiP-Verfahren). Dies ist aufwendig und in der Anwendbarkeit nur auf einfache Geometrie beschränkt.

Schutzschichtmaterialien wie Ni-oder Co-Basislegierungen oder Silicide lassen sich relativ problemlos mit Hilfe des Atmosphärischen Plasmaspritzens zu Schichten verarbeiten. Diese Schichten sind aber im allgemeinen im Herstellungszustand nicht ausreichend dicht, auch läßt die Haftfestigkeit auf dem Substrat zu wünschen übrig, so daß sich ein Nachverdichtungsvorgang, zum Beispiel durch heiß-isostatisches Pressen, anschliessen muß, um die Oxidation des Substrates und eine Abschälung des Schutzschicht zu vermeiden. Diese Nachbehandlung ist wiederum aufwendig, ihre Anwendbarkeit ist auf einfache Geometrien und kleine Abmessungen beschränkt.

Ein weiteres Verfahren zum Aufbringen pulverförmiger Materialien ist das Plasmaspritzen im Unterdruck, auch Low-Pressure-Plasma-Spraying - (LPPS) genannt. Damit lassen sich unmittelbar praktisch porenfreie und festhaftende Schichten herstellen (R. Henne, W. Weber, Proc. 10. Plansee-Seminar 1981, Seiten 283 bis 295 (RM 48), Band 2). Bei Auftragung der bisher in erster Linie in Betracht gezogenen Materialien, also insbesondere Ni-und Co-Basislegierungen oder MoSi$_2$, wurde jedoch die Wärmespannungsproblematik aufgrund stark unterschiedlicher Wärmedehnung von Grund- und Deckmaterial offensichtlich, so daß ab einer gewissen Probengröße und einer gewissen Schichtdicke senkrechte Risse in der Beschichtung auftreten. Auch sind Schichtablösungen zu beobachten.

Der Erfindung liegt die Aufgabe zugrunde, eine Beschichtung für ein Substrat, insbesondere aus einem refraktären Metall, anzugeben, welche auch bei unterschiedlichen Temperaturen, insbesondere auch bei sehr hohen Temperaturen in der Größenordnung über 1000°C dauerhaft am Substrat haftet und das Substrat gegenüber der Umgebung vollkommen dicht abdeckt.

Diese Aufgabe wird bei einer Beschichtung der eingangs beschriebenen Art erfindungsgemäß dadurch gelöst, daß die Beschichtung aus Aluminiumsilikat besteht.

Es hat sich überraschenderweise herausgestellt, daß eine solche Aluminiumsilikat-Beschichtung in ihrem Wärmedehnungsverhalten dem refraktärer Metalle, wie zum Beispiel Molybdän, so ähnlich ist, daß auch bis zu Temperaturen über 1000°C keine Risse oder Ablösungen der Aluminiumsilikat-Schicht vom Substrat auftritt. Besonders vorteilhaft ist eine solche Aluminiumsilikat-Schicht auch deshalb, weil sie das Substrat vollkommen dicht gegenüber der Umgebung abschließt, außerdem ist diese Schicht elektrisch isolierend, so daß ein mit einer Aluminiumsilikat-Schicht versehenes Substrat besonders geeignet ist zur Herstellung von Isolierschichten für den elektrochemischen Einsatz. In diesem Bereich sind die Forderungen hinsichtlich Vermeidung von durchgehenden Poren besonders extrem, da Kapillardruck und elektrolytisch erzeugte Gase auch feinste Poren und Risse aufsprengen, was sehr rasch zum vollständigen Versagen der Schicht führt. Die erfindungsgemäße Schicht aus Aluminiumsilikat vermeidet alle Poren und Risse, so daß die geschilderten Gefahren ausgeschaltet werden.

Der Anteil des Al$_2$O$_3$ zu dem SiO$_2$ im Aluminiumsilikat liegt vorzugsweise zwischen 1:4 un 4:1, wobei diese Anteile auf das Atomverhältnis bezogen sind. Ein besonders günstiges Material ist dabei Mullit (3 Al$_2$O$_3$ • 2 SiO$_2$).

Die Haftung der Aluminiumsilikat-Schicht auf dem Substrat kann dadurch verbessert werden, daß zwischen dem Substrat und der Aluminiumsilikat-Beschichtung eine plötzlich oder allmählich in die Aluminiumsilikat-Beschichtung übergehende Zwischenschicht aus dem Substratmaterial angeordnet ist.

Es kann weiterhin vorgesehen sein, daß sich an der Außenseite an die Aluminiumsilikat-Beschichtung eine MoSi$_2$-Beschichtung anschließt. Auf diese Weise ist es möglich, eine aktive Oxidationsschutzschicht an der Oberfläche der Schichtstruktur zu erzeugen.

Diese MoSi$_2$-Beschichtung kann Ge oder GeO$_2$ enthalten. Dies führt zu einer Absenkung der Wärmedehnung und der Erzeugung von Glasphasen. Dadurch werden Spannungen abgebaut.

Es ist auch möglich, daß diese MoSi$_2$-Beschichtung Aluminiumsilikat enthält. Dadurch wird in die MoSi$_2$-Matrix Aluminiumsilikat eingebaut, welches zu einer Verbesserung der Wärmedehnungsanpassung dieser Schicht an die darunterliegende Beschichtung führt.

Die Aluminiumsilikat-Beschichtung kann metalliche Zusätze enthalten, beispielsweise aus Mo oder MoSi$_2$. Durch diese metallischen Zusätze läßt sich ein Cermet herstellen, das einerseits hochtemperaturfest bleibt und andererseits eine hohe optische Selektivität (hohes Absorptionsvermögen bei sichtbarem Licht, geringe Abstrahlung im Infrarot) aufweist.

Das Substrat besteht in der Regel aus einem refraktären Material, beispielsweise aus Molybdän, Wolfram, Niob oder Tantal oder auch aus Titan, wobei Molybdän bevorzugt ist.

Der Erfindung liegt weiterhin die Aufgabe zugrunde, ein gattungsgemäßes Verfahren derart zu verbessern, daß mit ihm eine bis zu Temperaturen über 1000°C festhaftende, dichte Beschichtung auf einem Substrat hergestellt werden kann.

Diese Aufgabe wird bei einem Verfahren der eingangs beschriebenen Art erfindungsgemäß dadurch gelöst, daß man als aufzubringendes Material Aluminiumsilikate verwendet, daß man Substrat und Plasmabrenner in einer Unterdruckumgebung betreibt, und daß man vor dem Einbringen des Aluminiumsilikates in den Plasmastrahl durch einen "übertragenen Lichtbogen" die Oberfläche des Substrates aufrauht, reinigt und aktiviert und dabei gleichzeitig das Substrat aufheizt.

Wichtig ist bei diesem Verfahren also, daß man als Beschichtungsmaterial Aluminiumsilikat verwendet, daß man weiterhin das Plasmaspritzverfahren im Unterdruck ausführt und daß man schließlich vor dem Aufbringen des Beschichtungsmaterials die Oberfläche des Substrates dadurch aufrauht, reinigt und aktiviert, daß man einen "übertragenen Lichtbogen" erzeugt. Zu diesem Zweck wird zwischen dem Substrat und dem für das Plasmaspritzverfahren notwendigen Plasmabrenner eine Spannung angelegt, wobei das Substrat gegenüber dem Plasmabrenner auf negativem Potential liegt. In dem sich dadurch ausbildenden "übertragenen Lichtbogen" werden positive Ionen in Richtung auf das Substrat beschleunigt, die auf die Substratoberfläche auftreffen und diese reinigen, aufrauhen und aktivieren und gleichzeitig aufheizen, vorzugsweise soweit, bis das Substrat hellglühend wird. Durch diese Vorbereitung wird bei der nachfolgenden Beschichtung eine einwandfreie Haftung auf der gesamten Oberfäche des Substrates und eine gleichmäßige Beschichtung über die gesamte Oberfläche des Substrates erreicht.

Bei einem besonders vorteilhaften Vorgehen ist vorgesehen, daß man während des Betriebes des "übertragenen Lichtbogens" mit der Einbringung des Aluminiumsilikats in den Plasmabrenner und damit mit der Beschichtung des Substrates mit Aluminiumsilikat beginnt und daß man erst nach dem Beginn der Beschichtung den "übertragenen Lichtbogen" abschaltet. Es hat sich herausgestellt, daß diese Verfahrensweise besonders vorteilhaft ist, da auf diese Weise sichergestellt ist, daß die Oberfläche des Substrates bei der Beschichtung einwandfrei gesäubert ist und sich auf einer hohen Temperatur befindet, die verhindert, daß sich beim Abkühlen der aufgebrachten Beschichtung unterschiedliches Wärmedehnverhalten von Substrat und Beschichtung ergibt.

Der Anteil des $Al_2O_3$ zu dem $SiO_2$ im Aluminiumsilikat liegt vorzugsweise zwischen 1:4 und 4:1, besonders vorteilhaft ist die Verwendung von Mullit als Beschichtungsmaterial (3 $Al_2O_3$ • 2 $SiO_2$).

Das Aluminiumsilikat-Pulver besteht vorteilhafterweise aus Teilchen mit einem unter 50 μm liegenden Durchmesser.

Der Umgebungsdruck des Plasmabrenners und des Substrats wird vorzugsweise zwischen 10 und 500 mbar gewählt. ·

Es ist vorteilhaft, wenn man den Plasmabrenner mit Argon oder Argon mit Zusätzen von Wasserstoff, Stickstoff oder Helium betreibt.

Günstig ist es, wenn man beim Betrieb des "übertragenen Lichtbogens" zwischen Substrat und Plasmabrenner Spannungen zwischen 10 und 100 Volt anlegt, man erhält dadurch eine einwandfreie Reinigung, Aufrauhung und Aktivierung der Oberfläche und eine Aufheizung des Substrates, wobei man das Substrat durch den "übertragenen Lichtbogen" vorzugsweise auf Temperaturen über 1000°C aufheizt.

Es ist weiterhin vorgesehen, daß man nach dem Abschalten des "übertragenen Lichtbogens" die Leistung des Plasmabrenners zur Aufrechterhaltung der Substrattemperatur erhöht, so daß bei dem gesamten Beschichtungsvorgang das Substrat auf einer Temperatur von vorzugsweise über 1000°C gehalten wird.

Eine weitere Verbesserung der Haftungseigenschaften der Aluminiumsilikat-Beschichtung läßt sich dadurch erreichen, daß man zu Beginn der Beschichtung als Beschichtungsmaterial dem Substrat entsprechendes pulverförmiges Material verwendet und dann plötzlich oder allmählich auf Aluminiumsilikat übergeht.

Wenn man gemäß einem besonderen Ausführungsbeispiel der Erfindung von der Beschichtung mit Aluminiumsilikat plötzlich oder allmählich übergeht zu einer Beschichtung mit $MoSi_2$, kann man eine aktive Oxidationsschutzschicht an der Außenseite des beschichtenden Substrats erzielen, insbesondere wenn man dem $MoSi_2$ einen Zusatz von Ge oder $GeO_2$ beigibt. Dies erhöht die Duktilität. Durch Glasbildung wird dadurch auch das schützende $SiO_2$ gebunden. Günstig ist es weiterhin, wenn man dem $MoSi_2$ einen Zusatz von Aluminiumsilikat beigibt, dadurch läßt sich das Wärmedehnungsverhalten der $MoSi_2$-Schicht an das der Aluminiumsilikatschicht angleichen.

Es ist auch möglich, daß man dem Aluminiumsilikat metallische Zusätze beigibt, insbesondere in Form von Teilchen, deren Durchmesser im Bereich von wenigen μm bis unter 1 μm liegt. Diese metallischen Zusätze können beispielsweise aus Mo oder $MoSi_2$ bestehen. Dadurch wird ein Cermet erhalten, das einerseits hochtemperaturfest bleibt und andererseits eine hohe optische Selektivität aufweist (hohes Absorptionsvermögen bei sichtbarem Licht, geringe Abstrahlung in Infrarot).

Die Anwendungsmöglichkeiten der in dieser Weise beschichteten Substrate sind vielfältig. Diese Materialien können eingesetzt werden in der Hochtemperatur-Energie-und Wärmetechnik für Bauteile und Wandungen bei der Energieumwandlung, der Wärmeleitung (heat pipes) und bei Wärmetauschern (wozu auch Solarstrahlungs-Absorber gehören). Bei den zuletzt genannten sind insbesondere die oben beschriebenen Cermets vorteilhaft einzusetzen.

Auch in der Verfahrenstechnik ist die Verwendung derart beschichteter Substrate von Vorteil, beispielsweise für Wände von chemischen Reaktoren, die einseitig der Atmosphäre ausgesetzt sind, für Komponenten für die Glas-und Glasfaser herstellung (Ziehstempel oder für die Wandbeschichtung bei Behältern für Metall-und Salzschmelzen. Dabei ist insbesondere die vollständig dichte und rißfreie Ausbildung der Beschichtung von Vorteil.

Im Gebiet der Elektrochemie bilden die Beschichtungen einerseits Schutzschichten gegen Laugen und Säuren, andererseits Isolierschichten in Elektrolyten, wobei diese Beschichtungen in beiden Fällen auch hohen emperaturen standhalten.

Die nachfolgende Beschreibung bevorzugter Ausführunsformen der Erfindung dient im Zusammenhang mit der Zeichnung der näheren Erläuterung. Es zeigen:

Figur 1: Eine schematische Ansicht einer Anordnung zum Aufbringen einer Aluminiumsilikat-Beschichtung auf einem Substrat;

Figur 2: Eine Längsschnitt-Ansicht eines Plasmabrenners zum Aufbringen einer Aluminiumsilikat-Beschichtung;

Figur 3: Eine Längsschnitt-Ansicht eines Substrates mit einer Aluminiumsilikat-Beschichtung;

Figur 4: Eine Längsschnitt-Ansicht ähnlich Figur 3 mit einer Zwischenschicht aus Substratmaterial und mit plötzlichem Übergang zwischen Zwischenschicht und Aluminiumsilikatbeschichtung und

Figur 5: Eine Ansicht ähnlich Figur 4 mit allmählichem Übergang von der Zwischenschicht zur Aluminiumsilikatschicht.

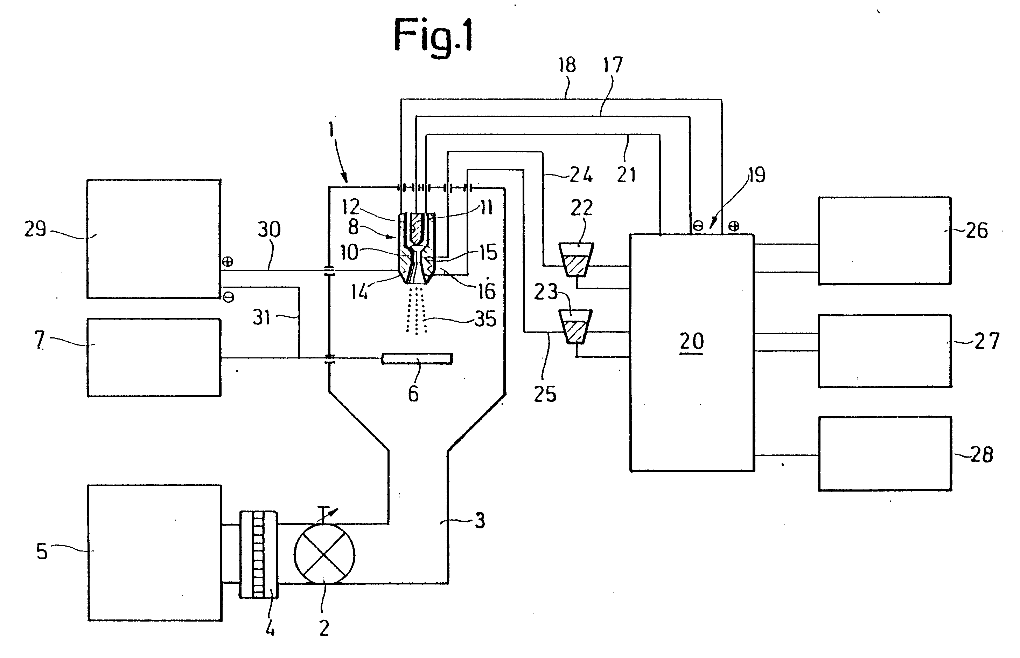

In Figur 1 ist eine Vakuumkammer 1 dargestellt, die über eine mit einem Drosselventil 2 verschließbare Saugleitung 3 evakuierbar ist. Stromabwärts des Drosselventils 2 ist in die Saugleitung 3 ein Staubfilter 4 eingeschaltet, die Saugleitung 3 mündet in ein an sich bekanntes Vakuumpumpen-System 5, das in Figur 1 nur - schematisch dargestellt ist.

Im Inneren der Vakuumkammer 1 ist ein Substrat 6 angeordnet, welches von dem zu beschichtenden Teil gebildet wird, beispielsweise einem Rohrstück aus Wolfram oder einem Formstück aus einem anderen refraktären Metall, beispielsweise Niob, Wolfram oder Tantal, aber auch aus Titan. Das Substrat 6 ist in der Vakuumkammer 1 bewegbar gelagert, es kann mittels einer Steuerung 7 bewegt werden, beispielsweise um eine Längsachse gedreht werden oder oszillierend bewegt werden.

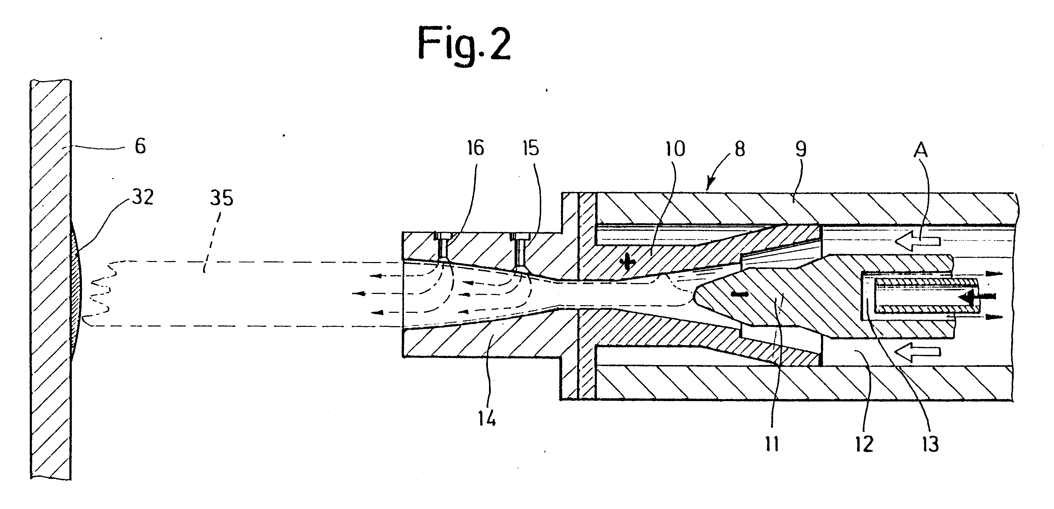

In der Vakuumkammer 1 ist weiterhin ein Plasmabrenner 9 angeordnet, dessen Aufbau sich aus der Detaildarstellung der Figur 2 ergibt. In einem Rohrstück 9 ist eine hülsenförmige, sich zum Rohrende hin verengende Anode 10 angeordnet, in deren Rückseite eine massive, stiftförmige Katode 11 eintaucht, die zusammen mit der Anode 10 einen Ringspalt 12 ausbildet, durch den in Richtung der Pfeile A ein Gas durch die Anode strömen kann. Die Anode 10 ist mit einer Wasserkühlung 13 versehen.

Der Anode 10 vorgeschaltet ist eine Laval-Düse 14, die zwei Einlaßbereiche 15 und 16 zur Zugabe des pulverförmigen Beschich tungsmaterials aufweist.

Der Plasmabrenner 8 ist mit seiner Längsachse auf das Substrat 6 hin ausgerichtet, das heißt die Laval-Düse 14 öffnet sich in Richtung auf das Substrat 6 (Figuren 1 und 2).

Die Anode 10 des Plasmabrenners ist über eine Leitung 18, die Katode 11 über eine Leitung 17 mit einer Spannungsquelle 19 verbunden, die sich im Inneren eines Kontroll-und Steuerschrankes 20 befindet. Dabei führt die Leitung 17 zum negativen Pol, die Leitung 18 zum positiven Pol dieser Spannungsquelle.

Von diesem Kontroll-und Steuerschrank 20 führt weiterhin eine Gaszufuhrleitung 21 zu dem Plasmabrenner 8, durch die Brenngas in den Ringspalt 12 eingeleitet wird.

Über den Kontroll-und Steuerschrank 20 werden auch zwei Pulverförderer 22 und 23 betrieben, die über Förderleitungen 24 beziehungsweise 25 mit den Einlässen 15 beziehungsweise 16 verbunden sind.

Der Kontroll-und Steuerschrank steht seinerseits in Verbindung mit einer Stromversorgung 26, einer Kühleinrichtung 27 und einer Gasversorgung 28.

Eine weitere Stromversorgung 29 legt zwischen Plasmabrenner 8 und Substrat 6 eine zusätzliche Spannung an. Dazu führt eine Leitung 30 von der Stromversorgung zur Anode 10 des Plasmabrenners 8, eine weitere Leitung 31 führt zum Substrat 6 oder zum in der Zeichnung nicht gesondert gezeichneten Substrathalter. Die Polung ist dabei so gewählt, daß das Substrat gegenüber der Anode auf negativem Potential liegt.

Zur Beschichtung eines Substrates, beispielsweise eines Rohrstückes aus Molybdän, wird der Plasmabrenner gezündet, das heißt es wird zwischen Anode 10 und Katode 11 eine Spannung angelegt, die zu einer Hochstromentladung zwischen den beiden Elektrode führt. Danach wird der Druck in der Vakuumkammer so weit abgesenkt und die Brennerleistung derart eingestellt, daß die Substratoberfläche etwa im Endbereich der leuchtenden Plasmaströmung liegt. Dies gewährleistet eine einwandfreie "Lichtbogen-Übertragung" und eine ausreichende Leitfähigkeit im Plasma, um das Sputter-Ätzen durchzuführen. Bei einer konkreten Brennerversion und einem Abstand zwischen Brenner und Substrat von circa 200 mm sind dabei folgende Parameter vorteilhaft:

Bei Argon mit einem Zusatz von Wasserstoff zur Erzeugung des Plasmastrahls 35 eine Brennerleistung zwischen 30 und 35 kW und ein Kammerdruck zwischen 15 und 20 mbar, oder bei Zufuhr von Argon mit einem Helium-Zusatz zur Erzeugung des Plasmastrahls 20 bis 25 kW Brennerleistung und 30 bis 35 mbar Kammerdruck.

Bei Verwendung robusterer Substrate kann Wasserstoff als Zusatz zu dem Argon verwendet werden, bei feiner aufgebauten Substraten ist dagegen ein Zusatz von Helium vorzuziehen.

Durch Anlegen einer Spannung von etwa 30 bis 50 Volt zwischen dem Substrat und der Anode des Plasmabrenners wird nunmehr das Sputter-Ätzen durchgeführt. Dabei werden positive Ionen in Richtung auf die Substratoberfläche beschleunigt. Sie bewirken eine Reinigung, Aufrauhung und Aktivierung dieser Fläche, außerdem eine Aufheizung auf eine Temperatur oberhalb von 1000°C. In dem "übertragenen Lichtbogen" treten dabei Stromwerte von 10 bis 20 Ampère auf, entsprechend einer Leistung bis zu 1 kW.

Dieses Sputter-Ätzen wird während eines Zeitraumes von 15 bis 30 Sekunden durchgeführt.

Noch während der Durchführung dieses Sputter-Ätzens wird damit begonnen, über einen der Einlaßbereiche 15 oder 16 Beschichtungsmaterial in den Plasmabrenner einzuführen, beispielsweise Mullit mit Teilchen, deren Durchmesser unterhalb von 20 µm liegt. Nach weiteren 30 bis 50 Sekunden, wobei diese Größe von der zu beschichtenden Fläche abhängig ist, wird das negative Potential vom Substrat abgeschaltet, dadurch wird das Sputter-Ätzen beendet. Gleichzeitig wird die Leistung des Brenners geringfügig erhöht, beispielsweise auf 40 kW, wodurch erreicht wird, daß die hohe Temperatur des Substrates während des gesamten Beschichtungsvorganges aufrechterhalten wird.

Um eine gute Aufschmelzung beim Spritzvorgang zu erhalten und um einerseits die erforderliche Brennerleistung und andererseits die Substratbelastung zu begrenzen, ist ein feines, kantig gebrochenes Ausgangspulver mit einem Teilchendurchmesser unter 20 µm vorzuziehen, das eine gute thermische Wechselwirkung mit der aufheizenden und beschleunigenden Plasmaströmung des Brenners gewährleistet.

Die Verwendung einer Laval-Düse als Vorsatz zu dem Plasmabrenner bewirkt einen langen, homogenen Plasmastrahl mit hoher Verweilzeit und guten Aufschmelzbedingungen für die Spritzpulver. Je nach Schmelzverhalten des jeweiligen Pulvers wird entweder der vordere oder der hintere Einlaßbereich 16 bzw. 15 verwendet. Hochschmelzende Materialien, zum Beispiel Mullit, werden normalerweise durch den näher zur Plasmaquelle liegenden Einlaßbereich 15 eingebracht. Die bei dem Sputter-Ätzen mit Hilfe des "übertragenen Lichtbogens" erreichten Temperaturen des Substrates können bei etwa 1400°C liegen, so daß gerade bei der ersten Beschichtungslage eine gute Anschmelzung und Anbindung gewährleistet ist. Die hohe Substrattemperatur verhindert auch eine zu rasche Abkühlung des Beschichtungsmaterials, welches mit Spannungen und möglicher Rißbildung verbunden wäre.

Mit diesem Verfahren konnten stabile und zuverlässige Mullit-Beschichtungen von über 300 µm Dicke auf kompakten Molybdän-Stäben von 12 mm Durchmesser hergestellt werden.

Es hat sich herausgestellt, daß plasmagespritzte Mullit-Schichten vielphasig sind, wobei jede Kristallisationssphase unterschiedlichen Kristallaufbau und unterschiedliche Wärmedehnungswerte aufweist. Aufgeprägte Spannungen können durch entsprechenden Phasenwechsel abgebaut werden. Bei entsprechender Parameterwahl können auch glasige Phasen gebildet werden, die verdichtend wirken und ebenfalls die Wärmedehnung herabsetzen sowie die Bewältigung von Spannungen verbessern. Entsprechend hergestellte Mullit-Schichten stimmen in Ihrer Wärmedehnung mit Molybdän praktisch überein.

$Al_2O_3$ und $SiO_2$ sind thermodynamisch wie auch chemisch sehr beständige Oxide. Beim Spritzvorgang tritt kein Sauerstoffverlust und Unterstöchiometrie auf, was die elektrischen Isoliereingenschaften beeinträchtigen würde.

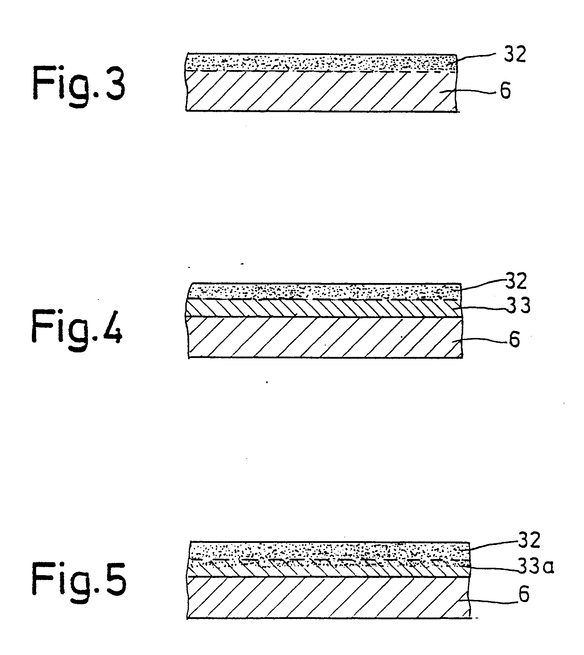

Während für die Beschichtung vorzugsweise reines Mullit verwendet wird ($3\ Al_2O_3 \bullet 2\ SiO_2$), ist die Beschichtung auch mit Aluminiumsilikaten anderer Zusammensetzung möglich. Die dabei erhaltene Schichtstruktur ist schematisch in Figur 3 dargestellt. Dort wird das Substrat 6 durch eine Aluminiumsilikat-Beschichtung 32 gleichmäßiger Dicke bedeckt.

Um eine weitere Verbesserung der Schichthaftung zu erreichen, ist es möglich, beim Beschichtungsvorgang zunächst mit pulverförmigem Substratmaterial zu beginnen und im Laufe der Beschichtung auf die Zugabe des Aluminiumsilikat-Materials überzugehen. Bei einem plötzlichen Übergang vom Substratmaterial auf das Aluminiumsilikat-Material ergibt sich eine Zwischenschicht 33 gleichmäßiger Dicke zwischen dem Substrat 6 und der Aluminiumsilikat-Schicht 32 (Figur 4).

Geht man allmählich von der Zugabe des Substratmaterials auf die Zugabe des Aluminiumsilikat-Materials über, erhält man zwischen dem Substrat 6 und der Aluminiumsilikat-Schicht 32 eine Zwischenschicht 33a, deren Zusammensetzung sich von der Substratseite zur Aluminiumsilikat-Schicht hin kontinuierlich verändert (Figur 5).

Es ist auch möglich, die Aluminiumsilikat-Schicht mit einer weiteren Beschichtung zu versehen, beispielsweise mit einer aktiven Oxidationsschicht durch Beschichtung mit $MoSi_2$. Auch dieser Übergang kann allmählich oder plötzlich erfolgen.

Dabei kann man zur Anpassung des Wärmedehnungsverhaltens der $MoSi_2$-Beschichtung diesem Material Aluminiumsilikat zumischen, so daß in eine $MoSi_2$-Matrix Aluminiumsilikat-Partikel eingebaut werden.

Es ist auch möglich, in die Aluminiumsilikat-Beschichtung Molybdän oder $MoSi_2$ einzubringen, also feine, metallisch leitende Partikel. Damit erhält man ein Cermet, das einerseits hochtemperaturfest bleibt und andererseits eine hohe optische Selektivität (hohes Absorptionsvermögen bei sichtbarem Licht, geringe Abstrahlung im Infraroten) aufweist.

## Ansprüche

1. Beschichtung für ein Substrat, insbesondere aus einem refraktären Metall, dadurch gekennzeichnet, daß die Beschichtung aus Aluminiumsilikat besteht.

2. Beschichtung nach Anspruch 1, dadurch gekennzeichnet, daß der Anteil des $Al_2O_3$ zu $SiO_2$ im Aluminiumsilikat zwischen 1:4 und 4:1 liegt.

3. Beschichtung nach Anspruch 2, dadurch gekennzeichnet, daß das Aluminiumsilikat Mullit (3 $Al_2O_3 \bullet 2 SiO_2$) ist.

4. Beschichtung nach einem der voranstehenden Ansprüche, dadurch gekennzeichnet, daß zwischen dem Substrat (6) und der Aluminiumsilikat-Beschichtung (32) eine plötzlich oder allmählich in die Aluminiumsilikat-Beschichtung (32) übergehende Zwischenschicht (33; 33a) aus dem Substratmaterial angeordnet ist.

5. Beschichtung nach einem der voranstehenden Ansprüche, dadurch gekennzeichnet, daß sich an der Außenseite an die Aluminiumsilikat-Beschichtung eine $MoSi_2$-Beschichtung anschließt.

6. Beschichtung nach Anspruch 5, dadurch gekennzeichnet, daß die $MoSi_2$-Beschichtung Ge oder $GeO_2$ enthält.

7. Beschichtung nach Anspruch 5, dadurch gekennzeichnet, daß die $MoSi_2$-Beschichtung Aluminiumsilikat enthält.

8. Beschichtung nach einem der voranstehenden Ansprüche, dadurch gekennzeichnet, daß die Aluminiumsilikat-Beschichtung metallische Zusätze enthält.

9. Beschichtung nach Anspruch 8, dadurch gekennzeichnet, daß die metallischen Zusätze aus Mo oder $MoSi_2$ bestehen.

10. Beschichtung nach einem der voranstehenden Ansprüche, dadurch gekennzeichnet, daß das Substrat aus Mo, W, Nb, Ta oder Ti besteht.

11. Verfahren zum Aufbringen einer Beschichtung auf einem Substrat, insbesondere einem refraktären Metall, mit Hilfe eines Plasmaspritzverfahrens, bei dem das aufzubringende Material in Pulverform in einen von einem Plasmabrenner erzeugten Plasmastrahl eingebracht und auf dem Substrat abgelagert wird, dadurch gekennzeichnet, daß man als aufzubringendes Material Aluminiumsilikate verwendet, daß man Substrat und Plasmabrenner in einer Unterdruckumgebung betreibt und daß man vor dem Einbringen des Aluminiumsilikats in den Plasmastrahl durch einen "übertragenen Lichtbogen" die Oberfläche des Substrats aufrauht, reinigt und aktiviert und dabei gleichzeitig das Substrat aufheizt.

12. Verfahren nach Anspruch 11, dadurch gekennzeichnet, daß man während des Betriebes des "übertragenen Lichtbogens" mit der Einbringung des Aluminiumsilikats in den Plasmabrenner und damit mit der Beschichtung des Substrats mit Aluminiumsilikat begin t und daß man erst nach dem Beginn der Beschichtung den "übertragenen Lichtbogen" abschaltet.

13. Verfahren nach Anspruch 11 oder 12, dadurch gekennzeichnet, daß der Anteil des $Al_2O_3$ zu $SiO_2$ im Aluminiumsilikat zwischen 1:4 und 4:1 liegt.

14. Verfahren nach Anspruch 13, dadurch gekennzeichnet, daß als Aluminiumsilikat Mullit (3 $Al_2O_3 \bullet 2 SiO_2$) verwendet wird.

15. Verfahren nach einem der voranstehenden Ansprüche, dadurch gekennzeichnet, daß das Aluminiumsilikatpulver aus Teilchen mit einem unter 50 μm liegenden Durchmesser besteht.

16. Verfahren nach einem der voranstehenden Ansprüche, dadurch gekennzeichnet, daß der Umgebungsdruck des Plasmabrenners und des Substrates zwischen 10 und 500 mbar liegt.

17. Verfahren nach einem der voranstehenden Ansprüche, dadurch gekennzeichnet, daß man den Plasmabrenner mit Argon oder Argon mit Zusätzen von Wasserstoff, Stickstoff oder Helium betreibt.

18. Verfahren nach einem der voranstehenden Ansprüche, dadurch gekennzeichnet, daß man beim Betrieb des "übertragenen Lichtbogens" zwischen Substrat und Plasmabrenner Spannungen zwischen 10 und 100 Volt anlegt.

19. Verfahren nach einem der voranstehenden Ansprüche, dadurch gekennzeichnet, daß man das Substrat durch den "übertragenen Lichtbogen" auf Temperaturen über 1000°C aufheizt.

20. Verfahren nach einem der Ansprüche 12 bis 19, dadurch gekennzeichnet, daß man nach dem Abschalten des "übertragenen Lichtbogens" die Leistung des Plasmabrenners zur Aufrechterhaltung des Substrattemperatur erhöht.

21. Verfahren nach einem der voranstehenden Ansprüche, dadurch gekennzeichnet, daß man zu Beginn der Beschichtung als Beschichtungsmaterial pulverförmiges Substratmaterial verwendet und dann plötzlich oder allmählich auf Aluminiumsilikat übergeht.

22. Verfahren nach einem der voranstehenden Ansprüche, dadurch gekennzeichnet, daß man von der Beschichtung mit Aluminiumsilikat plötzlich oder allmählich übergeht zu einer Beschichtung mit $MoSi_2$.

23. Verfahren nach Anspruch 22, dadurch gekennzeichnet, daß man dem $MoSi_2$ einen Zusatz von Ge oder $GeO_2$ beigibt.

24. Verfahren nach Anspruch 22, dadurch gekennzeichnet, daß man dem $MoSi_2$ einen Zusatz von Aluminiumsilikat beigibt.

25. Verfahren nach einem der voranstehenden Ansprüche, dadurch gekennzeichnet, daß man dem Aluminiumsilikat metallische Zusätze beigibt.

26. Verfahren nach Anspruch 25, dadurch gekennzeichnet, daß man die metallischen Zusätze in Form von Teilchen beigibt, deren Durchmesser im Bereich von wenigen $\mu$m bis unter 1 $\mu$m liegt.

27. Verfahren nach Anspruch 25 oder 26, dadurch gekennzeichnet, daß die metallischen Zusätze aus Mo oder $MoSi_2$ bestehen.

28. Verfahren nach einem der voranstehenden Ansprüche, dadurch gekennzeichnet, daß das Substrat aus Mo, W, Nb, Ta oder Ti besteht.

Blatt 1
3 Blatt

Deutsche Forschungs-u.Versuchsanstalt f. Luft -u.Raumfahrt e.V    5300 Bonn      A46 818 u

0 223 104

# Fig.1

0 223 104

# Fig.2

Fig.3

32
6

Fig.4

32
33
6

Fig.5

32
33a
6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CH-A- 648 358 (CASTOLIN SA)<br><br>* Patentansprüche 1,6 * | 1,2,4, 8,21, 25 | C 23 C 4/10 |
| Y | <br>* Seite 3, rechte Spalte, Zeile 24 *<br><br>--- | 11,12, 16 | |
| X | US-A-3 091 548 (H.P. DILLON)<br><br>* Spalte 5, Beispiel VII; Patentanspruch 2 *<br><br>--- | 1-5,8, 9 | |
| X | GB-B- 828 123 (AB KANTHAL)<br>* Seite 6, Zeilen 14-17; Patentansprüche 1,3,7 *<br><br>--- | 1,2,5 | **RECHERCHIERTE SACHGEBIETE (Int. Cl.4)** |
| X,P | EP-A-0 185 603 (UNITED TECHNOLOGIES CORP.)<br>* Patentansprüche 1,2 *<br><br>---      -/- | 1-4 | C 23 C 4/00<br>C 23 D 5/00 |

Der vorliegende Recherchenbericht wurde für alle Patentansprüche erstellt.

| Recherchenort | Abschlußdatum der Recherche | Prüfer |
|---|---|---|
| DEN HAAG | 28-01-1987 | PATTERSON A.M. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | THIN SOLID FILMS, Band 119, Nr. 2, September 1984, Seiten 141-152, Elsevier Sequoia, Lausanne, CH; R. HENNE et al.: "Low pressure plasma spraying-properties and potential for manufacturing improved electrolysers" * Seiten 144-146 * | 11,12, 16 | |
| | --- | | |
| A | PATENTS ABSTRACTS OF JAPAN, Band 4, Nr. 151 (C-28)[633], 23. Oktober 1980; & JP-A-55 97 464 (MITSUBISHI JUKOGYO K.K.) 24-07-1980 | 11,12 | |
| | --- | | |
| A | PATENTS ABSTRACTS OF JAPAN, Band 8, Nr. 266 (C-255)[1703], 6. Dezember 1984; & JP-A-59 140 362 (MITSUBISHI JUKOGYO K.K.) 11-08-1984 | 11,12 | RECHERCHIERTE SACHGEBIETE (Int. Cl.4) |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 28-01-1987 | PATTERSON A.M. |